(19) Europäisches Patentamt
European Patent Office
Office européen des brevets

(11) EP 2 151 322 A1

(12) **EUROPEAN PATENT APPLICATION**
published in accordance with Art. 153(4) EPC

(43) Date of publication:
**10.02.2010 Bulletin 2010/06**

(21) Application number: **08752841.0**

(22) Date of filing: **09.05.2008**

(51) Int Cl.:
*B32B 27/36* (2006.01) *B32B 27/32* (2006.01)
*H01G 9/02* (2006.01) *H01M 2/16* (2006.01)

(86) International application number:
**PCT/JP2008/058987**

(87) International publication number:
**WO 2008/140124 (20.11.2008 Gazette 2008/47)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **14.05.2007 JP 2007127702**

(71) Applicant: **Sumitomo Chemical Company, Limited**
**Tokyo 104-8260 (JP)**

(72) Inventors:
- **SATO, Hiroyuki**
  **Niihama-shi**
  **Ehime 792-0009 (JP)**
- **OHTOMO, Shinji**
  **Niihama-shi**
  **Ehime 792-0003 (JP)**
- **OKAMOTO, Satoshi**
  **Tsukuba-shi**
  **Ibaraki 305-0047 (JP)**
- **SUZUKI, Yutaka**
  **Tsukuba-shi**
  **Ibaraki 305-0044 (JP)**

(74) Representative: **Hart-Davis, Jason et al**
**Cabinet Beau de Loménie**
**158, rue de l'Université**
**75340 Paris Cedex 07 (FR)**

(54) **LAMINATED POROUS FILM**

(57) Provided is a laminated porous film comprising a laminate of a heat-resistant porous layer containing a liquid crystalline polyester and a shutdown layer containing a thermoplastic resin.

Fig. 1

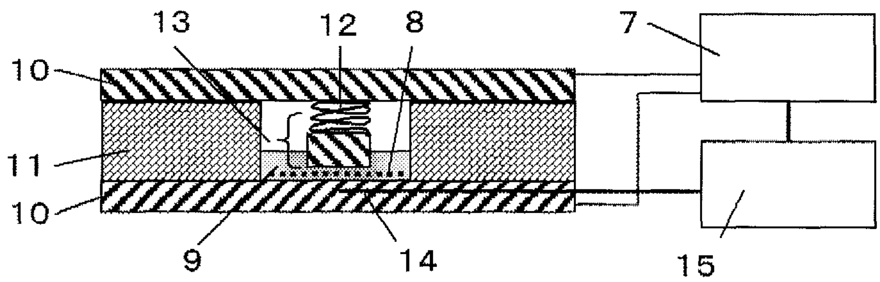


EP 2 151 322 A1

## Description

FIELD OF THE INVENTION

The present invention relates to a laminated porous film, and more particularly to a laminated porous film useful for a non-aqueous electrolyte secondary battery.

BACKGROUND ART

A laminated porous film is used as a separator in a non-aqueous electrolyte secondary battery such as a lithium ion secondary battery or a lithium polymer secondary battery. The separator comprises a porous film having micropores. With a non-aqueous electrolyte secondary battery, it is important for a separator to have a function of interrupting an electric current to prevent excessive flow of the electric current (shutdown function), when an abnormal electric current flows in the battery due to an electrical short circuit between a cathode and an anode, and the like. Therefore, the separator is required to shut down the electric current at a temperature as low as possible when the temperature inside the battery exceeds a normal operating temperature (to plug the micropores of the porous film), and even if the temperature inside the battery rises to a certain high temperature after the electric current is shut down, the separator is required to maintain the shutdown state without being broken due to a high temperature, in other words, to have high heat resistance.

As a conventional separator, a porous film comprising a liquid crystalline polyester is exemplified (see JP-A-2001-342282).

However, the porous film described above is not satisfactorily used in a non-aqueous secondary battery since it has a high shutdown temperature, although it has good heat resistance.

An object of the present invention is to provide a laminated porous film which has high heat resistance and can shut down an electric current at a lower temperature, and which has also good weather resistance and can be produced at low costs by a simpler method.

SUMMARY OF THE INVENTION

In order to solve the above problem, the present inventors have conducted earnest studies. As a result, they have completed the present invention. That is, the present application provides the following inventions.

<1> A laminated porous film comprising a laminate of a heat-resistant porous layer containing a liquid crystalline polyester and a shutdown layer containing a thermoplastic resin.
<2> The laminated porous film according to above <1>, wherein the heat-resistant porous layer further contains a filler.
<3> The laminated porous film according to above <1> or <2>, wherein the thermoplastic resin is polyethylene.
<4> The laminated porous film according to above <1> or <2>, wherein the heat-resistant porous layer has a thickness of 1 $\mu$m or more and 10 $\mu$m or less.
<5> The laminated porous film according to above <1> or <2>, wherein the heat-resistant porous layer is a coated layer.
<6> A separator made of the laminated porous film according to above <1> or <2>.
<7> A battery comprising the separator according to <6>.
<8> A capacitor comprising the separator according to <6>.

BRIEF DESCRIPTION OF THE DRAWING

Fig 1 is a schematic view of a device for measuring shutdown temperatures.

Explanations of Reference Numerals:

7: Impedance analyzer
8: Separator
9: Electrolyte
10: SUS plate
11: Teflon® spacer

12: Spring
13: Electrode
14: Thermocouple
15: Data-processing device

EMBODIMENTS OF THE INVENTION

The present invention provides a laminated porous film comprising a laminate of a heat-resistant porous layer containing a liquid crystalline polyester and a shutdown layer containing a thermoplastic resin.

In the present invention, the shut-down layer comprises a thermoplastic resin. The shut-down layer has micropores, and the pore size (diameter) of the micropores is usually 3 μm or less, preferably 1 μm or less. The shut-down layer usually has a porosity of not less than 30% and not more than 80% by volume, preferably not less than 40% and not more than 70% by volume. The shut-down layer acts to block the micropores by the deformation or softening of the thermoplastic resin constituting the layer, when a temperature rises above a normal operating temperature in a non-aqueous electrolyte secondary battery.

In the present invention, the thermoplastic resins which are not dissolved in an electrolyte of the non-aqueous electrolyte secondary battery may be selected. Specific examples of such resins include polyolefins such as polyethylene and polypropylene, and thermoplastic polyurethanes. They may be used as a mixture of two or more of them. The polyethylenes are preferable, because they soften at a relatively low temperature to induce shutdown. Specific examples of the polyethylenes include low-density polyethylenes, high-density polyethylenes and linear polyethylenes, as well as ultrahigh molecular weight polyethylenes. The thermoplastic resins preferably contain at least ultrahigh molecular weight polyethylene, since the piercing strength of the shut-down layer can be further improved. In some cases, the thermoplastic resins preferably contain a wax composed of a polyolefin with a low molecular weight (a weight average molecular weight of 10,000 or less) from the viewpoint of the easy production of the shut-down layer.

In the present invention, the shutdown layer usually has a thickness of 3 μm or more and 30 μm or less, more preferably 5 μm or more and 20 μm or less. In the present invention, the heat-resistant porous layer usually has a thickness of 1 μm or more and 30 μm or less, preferably 1 μm or more and 10 μm or less, in order to further improve the ion permeability in a battery. When the thickness of the heat-resistant porous layer is let be $T_A$ (μm) and the thickness of the shutdown layer is let be $T_B$ (μm), a value of $T_A/T_B$ is preferably 0.1 or more and 1 or less. In the present invention, when the laminated porous film contains one heat-resistant porous layer and one shutdown layer, the thickness of the laminated porous film is preferably 5 μm or more and 30 μm or less, more preferably 5 μm or more and 20 μm or less.

In the present invention, the shutdown temperature depends on the softening temperature of the thermoplastic resin, the thickness of the shutdown layer, and the pore size of the shutdown layer, and it is usually 170°C or less, preferably 140°C or less, more preferably 135°C or less. The lower limit of the shutdown temperature is usually about 100°C. The shutdown temperature tends to decrease as the softening temperature of the thermoplastic resin decreases, or the thickness of the shutdown layer increases, or the pore size of the shutdown layer is made smaller.

In the present invention, the heat-resistant porous layer has micropores, and the micropore size (diameter) is usually 3 μm or less, preferably 1 μm or less. A porosity of the heat-resistant porous layer is usually from 30 to 80% by volume, preferably from 40 to 70% by volume.

In the present invention, the heat-resistant porous layer contains a liquid crystalline polyester. The liquid crystalline polyester is a resin different from the thermoplastic resin contained in the shutdown layer.

Examples of the liquid crystalline polyester include:

(1) a polyester obtained by the polymerization of an aromatic hydroxycarboxylic acid, an aromatic dicarboxylic acid, and an aromatic diol;
(2) a polyester obtained by the polymerization of the same or different kinds of aromatic hydroxycarboxylic acids;
(3) a polyester obtained by the polymerization of an aromatic dicarboxylic acid and an aromatic diol;
(4) a polyester obtained by the reaction of a crystalline polyester such as polyethylene terephthalate with an aromatic hydroxycarboxylic acid;
(5) a polyester obtained by the polymerization of an aromatic hydroxycarboxylic acid, an aromatic dicarboxylic acid, and an aromatic amine having a phenolic hydroxyl group;
(6) a polyester obtained by the polymerization of an aromatic dicarboxylic acid and an aromatic amine having a phenolic hydroxyl group;
(7) a polyester obtained by the polymerization of an aromatic hydroxycarboxylic acid, an aromatic dicarboxylic acid, and an aromatic diamine; and the like.

In the present invention, the liquid crystalline polyester of (5), (6) or (7) is preferably used, because the resulting laminated porous film has better heat resistance.

Instead of these aromatic hydroxycarboxylic acids, aromatic dicarboxylic acids, aromatic diols and aromatic amines having phenolic hydroxyl groups, ester forming derivatives or amide forming derivatives thereof may be used.

Here, examples of the ester forming derivatives or amide forming derivatives of a carboxylic acid include derivatives in which the carboxyl group is converted into a derivative such as an acid chloride or an acid anhydride, which is highly reactive to promote a polyester-forming reaction or a polyamide-forming reaction, and derivatives in which the carboxyl group is reacted with an alcohol or ethylene glycol, or an amine to form an ester or an amide, which forms a polyester or a polyamide by transesterification or transamidation.

Examples of the ester forming derivatives of a phenolic hydroxyl group include derivatives in which the phenolic hydroxyl group is reacted with a carboxylic acid to form an ester, which forms a polyester by transesterification.

Examples of the amide forming derivatives of an amino group include derivatives in which the amino group is reacted with a carboxylic acid to form an amide, which forms a polyamide by transamidation.

The aromatic hydroxycarboxylic acid, aromatic dicarboxylic acid, aromatic diol, aromatic amine and aromatic diamine having a phenolic hydroxyl group may be substituted by a halogen atom such as a chlorine atom or a fluorine atom, an alkyl group such as a methyl group or an ethyl group, an aryl group such as a phenyl group or the like, so long as the substituents do not impair the ester- or amide-forming property.

The repeating units of the liquid crystalline polyester (A) described above may include the following repeating units, but are not limited thereto. Repeating units derived from an aromatic hydroxycarboxylic acid:

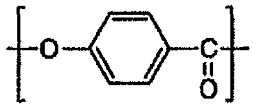
($A_1$)

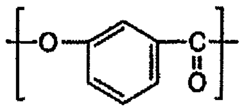
($A_2$)

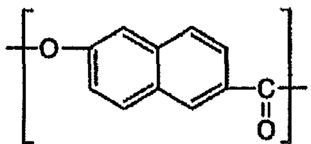
($A_3$)

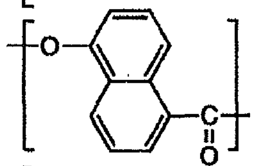
($A_4$)

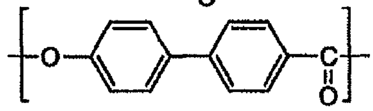
($A_5$)

The above repeating units may be substituted by a halogen atom, an alkyl group or an aryl group.

Repeating units derived from an aromatic dicarboxylic acid:

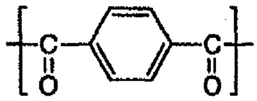

(B1)

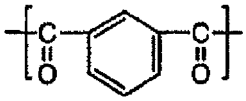

(B2)

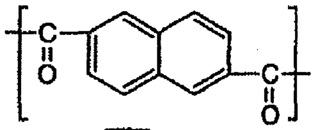

(B3)

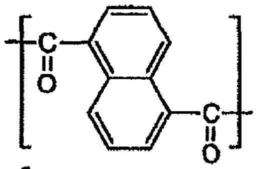

(B4)

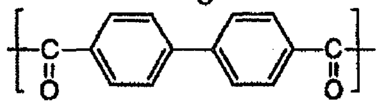

(B5)

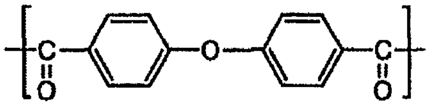

(B6)

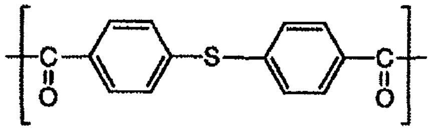

(B7)

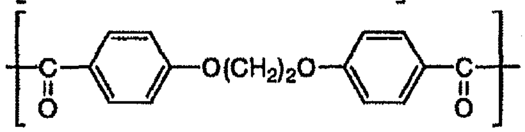

(B8)

The above repeating units may be substituted by a halogen atom, an alkyl group or an aryl group.

Repeating units derived from an aromatic diol:

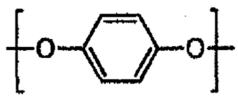

(C1)

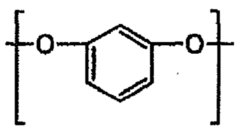

(C2)

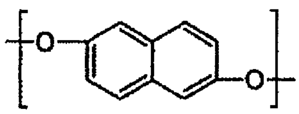

(C3)

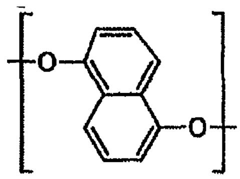

$(C_4)$

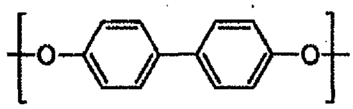

$(C_5)$

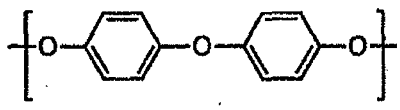

$(C_6)$

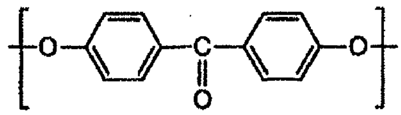

$(C_7)$

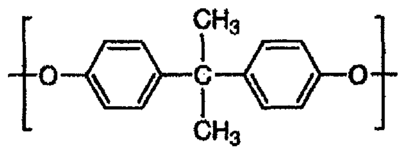

$(C_8)$

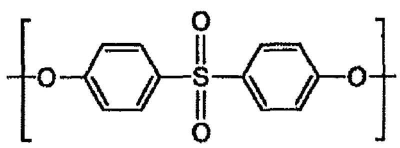

$(C_9)$

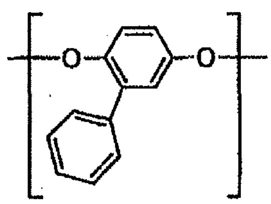

$(C_{10})$

The above repeating units may be substituted by a halogen atom, an alkyl group or an aryl group.

Repeating units derived from an aromatic amine having a phenolic hydroxyl group:

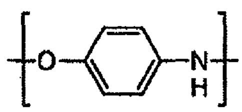

$(D_1)$

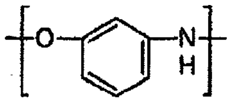
(D2)

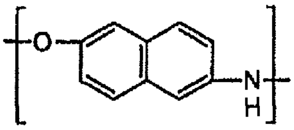
(D3)

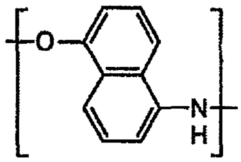
(D4)

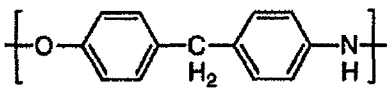
(D5)

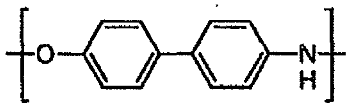
(D6)

The above repeating units may be substituted by a halogen atom, an alkyl group or an aryl group.

Repeating units derived from an aromatic diamine:

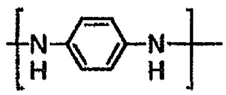
(E1)

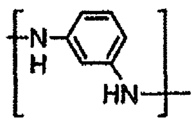
(E2)

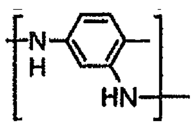
(E3)

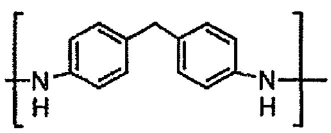
(E4)

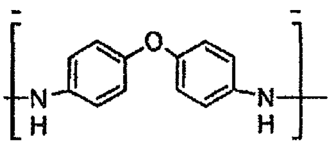
(E5)

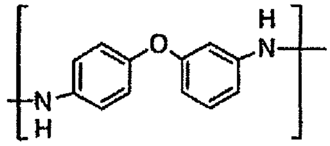

($E_6$)

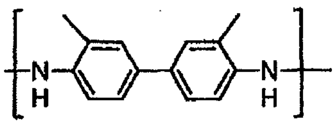

($E_7$)

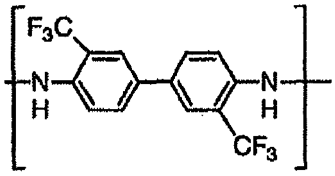

($E_8$)

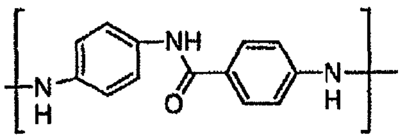

($E_9$)

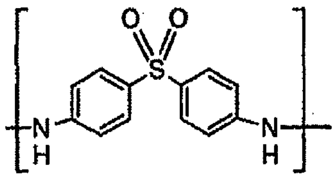

($E_{10}$)

The above repeating units may be substituted by a halogen atom, an alkyl group or an aryl group.

Examples of the alkyl group by which the repeating units may be substituted include alkyl groups having 1 to 10 carbon atoms. Among them, a methyl group, an ethyl group, a propyl group an a butyl group are preferable. Examples of the aryl group by which the repeating units may be substituted include aryl groups having 6 to 20 carbon atoms. Among them, a phenyl group is preferable.

In order to improve the heat resistance of the laminated porous film of the present invention, the liquid crystalline polyester (A) preferably comprises the repeating units represented by the formula ($A_1$), ($A_3$), ($B_1$), ($B_2$) or ($B_3$).

Here preferable combinations containing the repeating units include combinations (a) to (d) describe below.

(a): the combination of the repeating units ($A_1$), ($b_2$) and ($D_1$);

the combination of the repeating units ($A_3$), ($B_2$) and ($D_1$); the combination of the repeating units ($A_1$), ($B_1$), ($B_2$) and ($D_1$);
the combination of the repeating units ($A_3$), ($B_1$), ($B_2$) and ($D_1$);
the combination of the repeating units ($A_3$), ($B_3$) and ($D_1$); or the combination of the repeating units ($B_1$), ($B_2$) or ($B_3$), and ($D_1$).
(b): the combinations of the above (a) in each of which a part or all of the units ($D_1$) is replaced with the units ($D_2$).
(c): the combinations of the above (a) in each of which a part of the units ($A_1$) is replaced with the units ($A_3$).
(d): the combinations of the above (a) in each of which a part or all of the units ($D_1$) is replaced with the units ($E_1$) or ($E_5$).

A more preferable combination contains 30 to 80% by mole of repeating units derived from at least one compound selected from the group consisting of p-hydroxybenzoic acid and 2-hydroxy-6-naphthoic acid, 10 to 35% by mole of repeating units derived from at least one compound selected from the group consisting of 4-hydroxyaniline and 4,4'-diaminodiphenyl ether, and 10 to 35% by mole of repeating units derived from at least one compound selected from the group consisting of terephthalic acid and isophthalic acid, and a particularly preferable combination contains 30 to 80%

by mole of repeating units derived from 2-hydroxy-6-naphthoic acid, 10 to 35% by mole of repeating units derived from 4-hydroxyaniline, and 10 to 35% by mole of repeating units derived from isophthalic acid.

The weight average molecular weight of the liquid crystalline polyester is not particularly limited, and it is usually from about 5,000 to about 500,000, preferably from about 100,000 to about 500,000.

Methods for producing the liquid crystalline polyester are not particularly limited in the present invention, and an example thereof is a method comprising acylating an aromatic hydroxycarboxylic acid, an aromatic diol, or an aromatic amine or diamine having a phenolic hydroxyl group with an excessive amount of a fatty acid anhydride (acylation) to give an acylated compound, and polymerizing the resulting acylatd compound with an aromatic hydroxycarboxylic acid and/or an aromatic dicarboxylic acid by transesterification or transamidation.

In the acylation reaction, the fatty acid anhydride is added in an amount of preferably from 1.0 to 1.2 equivalents, more preferably from 1.05 to 1.1 equivalents per one equivalent of the total of the phenolic hydroxyl group and the amino group. When the amount of the fatty acid anhydride to be added is too small, the acylated compound, the aromatic hydroxycarboxylic acid, the aromatic dicarboxylic acid and the like tend to sublimate during the polymerization through transesterification or transamidation so that pipes in a reactor or the like may be easily clogged. When the amount of the fatty acid anhydride to be added is too large, the resulting liquid crystalline polyester may be remarkably colored.

The acylation reaction is preferably performed at a temperature of 130 to 180°C for 5 minutes to 10 hours, more preferably at a temperature of 140 to 160°C for 10 minutes to 3 hours.

The fatty acid anhydride used in the acylation reaction is not particularly limited, and examples thereof includes acetic anhydride, propionic anhydride, butyric anhydride, isobutyric anhydride, valeric anhydride, pivalic anhydride, 2-ethyl hexanoic anhydride, monochloroacetic anhydride, dichloroacetic anhydride, trichloroacetic anhydride, monobromoacetic anhydride, dibromoacetic anhydride, tribromoacetic anhydride, monofluoroacetic ahnydride, difluoroacetic anhydride, trifluoroacetic anhydride, glutaric anhydride, maleic anhydride, succinic anhydride, β-bromopropionic anhydride, and the like. These anhydrides may be used as a mixture of two or more of them. Acetic anhydride, propionic anhydride, butyric anhydride and isobutyric anhydride are preferable, and acetic anhydride is more preferable, from the viewpoints of costs and operability.

In the polymerization through transesterification or transamidation, the acyl groups in the acylated compound are preferably present in an amount of 0.8 to 1.2 times the equivalent of the carboxyl groups. The polymerization is preferably performed at a temperature of 400°C or less, more preferably 350°C or less. The rate of a temperature increase is preferably 0.1 to 50°C/minute, more preferably 0.3 to 5°C/minute. In this step, in order to shift the equilibrium, it is preferable to remove the by-produced fatty acids and unreacted fatty acid anhydrides from the system by evaporation, and the like.

The acylation reaction, and the polymerization through transesterification or transamidation may be performed in the presence of a catalyst. As the catalyst, known catalysts which have been conventionally used as a catalyst for polyester polymerization can be used. Examples of the catalysts include metal salt catalysts such as magnesium acetate, stannous acetate, tetrabutyl titanate, lead acetate, sodium acetate, potassium acetate and antimony trioxide; organic compound catalysts such as N,N-dimethylaminopyridine and N-methyhmidazole; and the like. The catalyst can be present in the acylation reaction, and it may not be necessary to remove the catalyst from a reaction mixture after the acylation reaction. When the catalyst is not removed from the reaction mixture after the acylation reaction, the subsequent treatment (polymerization through transesterification or transamidation) can be performed using the resulting reaction mixture as such. In this case, the catalyst as listed above may be supplemented.

The polymerization through transesterification or transamidation is usually performed by melt polymerization, while the combination of melt polymerization and solid-phase polymerization may be employed. The solid-phase polymerization may be performed by recovering a polymer from a melt polymerization step, solidifying the polymer, pulverizing the solidified polymer to give the powder-form or flake-form polymer, and carrying out solid-phase polymerization by a known method. Specifically, for example, a method comprising thermally treating the polymer in a solid-phase state at a temperature of 20 to 350°C for 1 to 30 hours under an inert atmosphere such as nitrogen may be exemplified. The solid-phase polymerization may be performed with stirring or without stirring the polymer in a static state. When a suitable stirring device is provided, a melt polymerization chamber and a solid-phase polymerization chamber can be combined into one reaction chamber. After the solid-phase polymerization, the resulting liquid crystalline polyester may be pelletized in a known manner and then used.

The liquid crystalline polyester may be produced, for example, using a batch equipment or a continuous equipment, and can be produced as described above.

In the present invention, preferably, the heat-resistant porous layer further contains a filler. In the present invention, the material of the filler may be selected from an organic powder, an inorganic powder and the mixture thereof.

Examples of the organic powder described above include powders made of organic substances, for example, homopolymers of styrene, vinyl ketone, acrylonitrile, methyl methacrylate, ethyl methacrylate, glycidyl methacrylate, glycidyl acrylate or methyl acrylate, or copolymers of two or more monomers; fluororesins such as polytetrafluoroethylene, tetrafluoroethylene-hexafluoropropylene copolymers, tetrafluoroethylene-ethylene copolymers and polyvinylidene fluoride; melamine resins; urea resins; polyolefins; and polymethacrylates. The organic powder may be used alone or as a mixture of two or more of them. Among these organic powders, the polytetrafluoroethylene powder is preferable because of the chemical stability thereof.

Examples of the inorganic powder as described above include powders made of inorganic substances, for example, metal oxides, metal nitrides, metal carbides, metal hydroxides, carbonates, and sulfates, and specifically includes particles made of alumina, silica, titanium dioxide, or calcium carbonate. The inorganic powder may be used alone or as a mixture of two or more of them. Among these inorganic powders, the alumina powder is preferable because of the chemical stability thereof. Herein, preferably, all particles constituting the fillers are alumina particles. More preferably, all particles constituting the fillers are alumina particles, and a part or all of the particles are substantially spherical alumina particles. In the present invention, the substantially spherical alumina particles encompass completely spherical particles.

In the present invention, a filler content in the heat-resistant porous layer depends on the specific gravities of the materials of the fillers. For example, when all of the particles constituting the fillers are alumina particles, the weight of the fillers is usually not less than 20 and not more than 95, when the whole weight of the heat-resistant porous layer is let be 100, preferably not less than 30% by weight and not more than 90% by weight. These ranges can be suitably selected according to the specific gravities of the materials of the fillers.

The shape of the filler particles used in the present invention may include substantially spherical, plate, cylindrical, needle, whisker and fiber shapes, and particles with either shape may be used. The particles constituting the filler preferably have an average particle diameter of 0.01μ m or more and 1 μm or less, from the viewpoints of the strength and smoothness of the heat-resistant porous layer.

Here, the average particle diameter of the filler is a value measured by a scanning electron microscopy. Specifically, 50 particles are randomly selected from a microphotograph of the filler particles, the particle diameter of each particle is measured, and the particle diameters of the 50 particles are averaged and used as a number average particle diameter of the filler particles.

From the viewpoint of ion permeability, the laminated porous film of the present invention preferably has a gas permeability of not less than 50 sec./100 cc and not more than 1,000 sec./100 cc, more preferably not less than 50 see./100 cc and not more than 500 sec./100 cc, when measured by a Gurley method.

The laminated porous film of the present invention is particularly useful as a separator for a non-aqueous electrolyte secondary battery such as a lithium ion secondary battery and a lithium polymer secondary battery. In addition, it can also be satisfactorily used for an aqueous electrolyte secondary battery, a non-aqueous electrolyte primary battery, or a capacitor.

Here, a method for producing the laminated porous film of the present invention will be described.

Firstly, a method for producing a shut-down layer will be outlined. A method for producing the shut-down layer of the present invention is not particularly limited, and includes a method wherein a film composed of a thermoplastic resin produced by a known method, such as a method comprising the steps of forming a film from a thermoplastic resin to which a plasticizer has been added, and then removing the plasticizer from the film with an adequate solvent, as described in JP-A-7-29563, or a method comprising the steps of providing a film of a thermoplastic resin which has been produced by a conventional process, and selectively drawing structurally weak amorphous parts of the film to form micropores, as described in JP-A-7-304110. When the shut-down layer of the present invention comprises a polyolefin resin containing an ultrahigh molecular weight polyethylene and a low molecular weight polyolefin having a weight average molecular weight of 10,000 or less, the layer is produced preferably by the following method, from the viewpoint of the production cost:

a method comprising the following steps:

(1) preparing a polyolefin resin composition by kneading 100 parts by weight of an ultrahigh molecular weight polyethylene, 5 to 200 parts by weight of a low molecular weight polyolefin having a weight average molecular weight of 10,000 or less, and 100 to 400 parts by weight of an inorganic filler;
(2) molding the polyolefin resin composition prepared in step (1) to form a sheet;
(3) removing the inorganic filler from the sheet obtained in step (2); and
(4) drawing the sheet obtained in the step (3) to form a shut-down layer, or

a method comprising the steps of

(1) preparing a polyolefin resin composition by kneading 100 parts by weight of an ultrahigh molecular weight polyethylene, 5 to 200 parts by weight of a low molecular weight polyolefin having a weight average molecular weight of 10,000 or less, and 100 to 400 parts by weight of an inorganic filler;
(2) molding the polyolefin resin composition prepared in step (1) to form a sheet;

(3) drawing the sheet obtained in step (2); and
(4) removing the inorganic filler from the drawn sheet obtained in step (3) to form a shut-down layer.

The former method in which the resulting sheet is drawn after the inorganic filler is removed from the sheet is preferable, because the shut-down temperature of the laminated porous film of the present invention in which the resulting shut-down layer and a heat-resistant porous layer are laminated can be made lower.

The inorganic filler has a number average particle diameter (diameter) of preferably 0.5 μm or less, more preferably 0.2 μm or less, from the viewpoints of strength and ion permeability of the shut-down layer. Here, the average particle diameter of the filler is a value measured by a scanning electron microscopy. Specifically, 50 particles are randomly selected from a microphotograph of the filler particles, the particle diameter of each particle is measured, and the particle diameters of the 50 particles are averaged and used as a number average particle diameter of the filler particles.

Examples of the inorganic fillers include calcium carbonate, magnesium carbonate, barium carbonate, zinc oxide, calcium oxide, aluminum hydroxide, magnesium hydroxide, calcium hydroxide, calcium sulfate, silicic acid, zinc oxide, calcium chloride, sodium chloride and magnesium sulfate. These inorganic fillers can be removed from a sheet or film with an acid or alkali solution. In the present invention, it is preferable to use calcium carbonate, because particles having a very small particle diameter can be easily obtained.

A method for producing the polyolefin resin composition is not particularly limited. Materials for forming a polyolefin resin composition such as a polyolefin resin and an inorganic filler are mixed with a mixing apparatus such as a roll, a Banbury mixer, a single screw extruder or a twin screw extruder to give a polyolefin resin composition. When the materials are mixed, additives such as fatty acid esters, stabilizers, anti-oxidants, UV absorbers, and flame retardants may optionally be added thereto.

A method for forming a sheet from the polyolefin resin composition is not particularly limited, and the sheet can be produced by a sheet forming method such as inflation molding, calendering, T-die extrusion or scaifing. The sheet is preferably formed by the following method, because a sheet having high precision in the film thickness can be obtained.

In a preferable method for producing a sheet from a polyolefin resin composition, a polyolefin resin composition is roll-formed using a pair of rotational molding tools, the surface temperature of which is adjusted to a temperature higher than the melting point of a polyolefin resin contained in the polyolefin resin composition. The surface temperatures of the rotational molding tools are preferably a temperature of (the melting point + 5)°C or higher. The upper limit of the surface temperature is preferably a temperature of (the melting point + 30)°C or lower, more preferably (the melting point + 20)°C or lower. Rolls and belts are exemplified as a pair of rotational molding tools. The circumferential speeds of the pair of rotational molding tools are not necessarily the same, and the difference between them may be within a range of about ±5%. When a shut-down layer is formed using the sheet obtained by such a method, a shut-down layer excellent in strength, ion permeability and gas permeability can be obtained. A laminate of the single layer sheets obtained by the above-mentioned method may be used for producing the shut-down layer.

When the polyolefin resin composition is roll-molded with a pair of rotating molding tools, a strand of the polyolefin resin composition extruded from an extruder may be introduced into a gap between a pair of rotating molding tools, or may be formed into pellets of the polyolefin resin composition and then the pellets may be used.

When the sheet of the polyolefin resin composition or the sheet of the polyolefin resin composition from which the inorganic filler is removed is drawn, a tenter, a roll or an autograph may be used. The draw ratio is preferably from 2 to 12, more preferably from 4 to 10, in view of gas permeability. The sheet is usually drawn at a temperature of not lower than the softening point of a polyolefin resin and not exceeding the melting point thereof. The drawing temperature is preferably from 80 to 115°C. When the drawing temperature is too low, the sheet is easily damaged upon drawing. When it is too high, the gas permeability or the ion permeability of the resulting film sometimes lowers. The sheet is preferably heat-set after drawing. The heat-set temperature is preferably a temperature lower than the melting point of a polyolefin resin.

The shutdown layer comprising the thermoplastic resin can be produced as described above. In the present invention, the shutdown layer comprising the thermoplastic resin and the heat-resistant porous layer are laminated with each other to form a laminated porous film. The heat-resistant porous layer may be provided on one side or both sides of the shutdown layer.

Examples of methods for laminating the shutdown layer and the heat-resistant porous layer include a method comprising separately producing the heat-resistant porous layer and the shutdown layer, and laminating them with each other; a method comprising coating at least one side of the shutdown layer with a coating liquid containing the liquid crystalline polyester to form the heat-resistant porous layer, and the like. In the present invention, the heat-resistant porous layer is preferably a coated layer from the viewpoint of productivity, and therefore the latter method is preferable. The method comprising coating at least one side of the shutdown layer with a coating liquid containing the liquid crystalline polyester to form the heat-resistant porous layer preferably comprises the following steps (a) to (c):

(a) dissolving 100 parts by weight of the liquid crystalline polyester in a solvent to give a solution, and dispersing 1 to 1500 parts by weight of a filler, based on 100 parts by weight of the liquid crystalline polyester, in the solution to prepare a slurry coating liquid.

(b) coating at least one side of the shutdown layer with the coating liquid to form a coating film.

(c) after removing the solvent from the coating film, immersing the film in a solvent which does not dissolve the liquid crystalline polyester, and subsequently drying the film to give a heat-resistant porous layer.

In the step (a), a polar amide solvent or a polar urea solvent is preferably used as the solvent when the liquid crystalline polyester has a nitrogen atom. Specific examples thereof include N,N-dimethylformamide, N,N-dimethylacetoamide, N-methyl-2-pyrrolidone (NMP), and tetramethylurea.

In the step (a), a protic solvent is preferably used as the solvent when the liquid crystalline polyester has no nitrogen atom. Specific examples thereof include halogen-substituted phenol compounds of the formula ($L_1$):

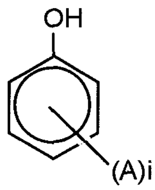 ($L_1$)

wherein A represents a halogen atom or a trihalomethyl group, and i is an integer of 1 to 5, provided that when i is 2 or more, plural A's may be the same or different.

In the formula ($L_1$), a halogen atom may be a fluorine atom, a chlorine atom, a bromine atom or an iodine atom. Among them, a fluorine atom or a chlorine atom is preferable, since the liquid crystalline polyester is readily dissolved in the solvent. In this case, examples of the halogen-substituted phenol compound include pentafluorophenol, tetrafluorophenol, o-chlorophenol, p-chlorophenol, etc. Among them, o-chlorophenol and p-chlorophenol are more preferable, and o-chlorophenol is particularly preferable.

In the step (a), the amount of the solvent for the liquid crystalline polyester may be suitably selected. Usually, 0.01 to 100 parts by weight of the liquid crystalline polyester is used based on 100 parts by weight of the solvent. When the amount of the liquid crystalline polyester is less than 0.01 part by weight, the thickness of the resulting heat-resistant porous layer tends to be uneven. On the other hand, when the amount of the liquid crystalline polyester exceeds 100 parts by weight, it may be difficult to dissolve the polyester. From the viewpoints of operability and economical efficiency, the amount of the liquid crystalline polyester is preferably from 0.5 to 50 parts by weight, more preferably from 1 to 20 parts by weight, based on 100 parts by weight of the solvent.

In the step (a), examples of the filler include those listed above. As a device used in a method for dispersing the filler to prepare a slurry coating liquid, a pressure disperser such as a Gorline homogenizer or a nanomizer may be used.

In the step (b), examples of the method for applying the slurry coating liquid include knife coating, blade coating, bar coating, gravure coating and die coating. The bar or knife coating is simple and easy, while the die coating is industrially preferable because an apparatus for die coating has such a structure that the solution is not exposed to an air. The coating step may be repeated twice or more in some cases. Preferably, the coating is continuously performed using a coating device described in JP-A-2001-316006 and the method described in JP-A-2001-23602.

In the step (c), for removing the solvent, a method comprising evaporation a solvent is usually employed. Examples of the method for evaporating the solvent include methods such as heating, depressurization and ventilation. Among them, it is preferable to heat the film to evaporate the solvent from the viewpoints of the production efficiency and operability, and it is more preferable to heat the film to evaporate the solvent with ventilation.

In the step (c), examples of the solvent which does not dissolve the liquid crystalline polyester include water and alcohols. The immersion process also functions to wash the resulting heat-resistant porous layer. After the immersion, drying is performed by heating, depressurization, or ventilation to give the heat-resistant porous layer.

When the heat-resistant porous layer and the shutdown layer are separately produced and they are laminated with each other, a thermal fusion bonding method may be used. When the heat-resistant porous layer is independently produced, the procedure described in JP-A-2001-342282 may be employed.

Hereinafter, a battery having the laminated porous film of the present invention as a separator will be described with respect to a lithium ion secondary battery, which is a typical example of a non-aqueous electrolyte secondary battery.

The lithium ion secondary battery may be produced by any known method. For example, a battery can be produced by laminating a cathode sheet comprising a cathode collector coated with an electrode mixture for a cathode, an anode sheet comprising an anode collector coated with an electrode mixture for an anode, and the separator and

winding the laminate to give an electrode member, placing the electrode member in a battery can, and impregnating the electrode member in the container with an electrolytic solution prepared by dissolving an electrolyte in an organic solvent. The heat-resistant porous layer in the laminated porous film of the present invention may be brought into contact with either the cathode sheet or the anode sheet. When a pair of the heat-resistant porous layers are provided on the respective sides of the shut-down layer, the heat-resistant porous layers can be brought into contact with the cathode sheet and the anode sheet, respectively.

The electrode member has a cross section, which appears when the electrode member is cut along direction vertical to the axis of winding, in the shape of a circle, an oval, a rectangle, a rectangle the edges of which are chamfered, and the like. The battery can be of any shape such as a paper sheet, a coin, a cylinder or a box-shape.

As the cathode sheet, a sheet comprising a cathode collector coated with an electrode mixture for a cathode which comprises a cathode active material, a conductive agent and a binder is usually used. The electrode mixture for a cathode preferably comprises a material capable of doping or dedoping lithium ions as a cathode active material, a carbonaceous material as a conductive agent, and a thermoplastic resin as a binder.

Specific examples of the cathode active materials include metal composite oxides comprising at least one transition metal element selected from the group consisting of V, Mn, Fe, Co, Ni, Cr and Ti, and an alkali metal element such as Li or Na, preferably composite oxides having an $\alpha$-$NaFeO_2$ structure as a basic structure, more preferably composite oxides such as lithium cobaltate, lithium nickelate and a composite oxide wherein a part of nickel of lithium nickelate is replaced with other element such as Mn or Co, from the viewpoint of a high average discharge potential. Composite oxides having a spinel structure such as spinel lithium manganese as a basic structure may also be exemplified.

Examples of the binders include thermoplastic resins, specifically polyvinylidene fluoride, vinylidene fluoride copolymers, polytetrafluoroethylene, tetrafluoroethylene-hexafluoropropylene copolymers, tetrafluoroethylene-perfluoroalkyl vinyl ether copolymers, ethylene-tetrafluoroethylene copolymers, vinylidene fluoride-hexafluoropropylene-tetrafluoroethylene copolymers, thermoplastic polyimides, carboxymethyl cellulose, polyethylene, and polypropylene.

Examples of the conductive agents include carbonaceous materials, specifically natural graphite, artificial graphite, cokes and carbon black. They may be used as a mixture of two or more of them.

Examples of the cathode collector include aluminum and stainless steel. Aluminum is preferable because of lightweight, low cost and easy processability.

Examples of a method for coating a cathode collector with an electrode mixture for a cathode include a pressure molding method, and a method comprising the steps of forming an electrode mixture for a cathode into a paste with a solvent or the like, coating a cathode collector with the paste, and drying the paste following by pressure bonding by pressing.

As the anode sheet, a sheet comprising a collector coated with an electrode mixture for an anode which comprises a material capable of doping or dedoping lithium ions may be used. Also, a lithium metal sheet and a lithium alloy sheet may be used. Specific examples of the materials capable of doping or dedoping lithium ions include carbonaceous materials such as natural graphite, artificial graphite, cokes, carbon black, pyrolytic carbons, carbon fibers, and baked organic polymer compounds. Also, a chalcogenide such as an oxide or a sulfide capable of doping or dedoping lithium ions at a potential lower than that of the cathode may be used. Among the carbonaceous materials, a carbonaceous material comprising graphite such as natural graphite or artificial graphite as a main component is preferable, because of good potential flatness and a low average discharge potential. The carbonaceous material is in the shape of any of a flake such as natural graphite, a sphere such as mesocarbon microbead, a fiber such as graphitized carbon fiber, an aggregate of a fine powder of these materials, and the like.

When an electrode mixture for an anode including polyethylene carbonate is used in a case where the electrolytic solution does not contain ethylene carbonate which is described later, the cycle characteristic and high current discharge characteristics of the obtained battery can be preferably improved.

The electrode mixture for an anode may optionally comprise a binder. Examples of the binders include thermoplastic resins, specifically polyvinylidene fluoride, polyvinylidene fluoride copolymers, vinylidene fluoride-hexafluoropropylene-tetrafluoroethylene copolymers, thermoplastic polyimides, carboxymethyl cellulose, polyethylene, and polypropylene.

The chalcogenide such as an oxide or a sulfide used as the material capable of doping or dedoping lithium ions contained in the electrode mixture for an anode include a crystalline or amorphous chalcogenide such as an oxide or a sulfide which comprises an element of Group 13, 14 or 15 of the Periodic Table, in particular, an amorphous chalcogenide comprising tin oxide. A carbonaceous material as a conductive agent and a thermoplastic resin as a binder may also be added thereto as necessary.

Examples of the anode collector used in the anode sheet include copper, nickel, and stainless steel. Copper is preferable, because it hardly forms an alloy with lithium, and it is easily formed into a thin film. Examples of a method for coating an anode collector with an electrode mixture for an anode include the same methods as those in the case of the cathode, that is, a pressure molding method, and a method comprising the steps of forming an electrode mixture

for an anode into a paste with a solvent or the like, coating an anode collector with the paste, and drying the paste following by pressure bonding by pressing.

As the electrolytic solution, for example, an electrolytic solution comprising a lithium salt dissolved in an organic solvent may be used. Examples of the lithium salt include $LiClO_4$, $LiPF_6$, $LiAsF_6$, $LiSbF_6$, $LIBF_4$, $LiCF_3SO_3$, $LiN(SO_2CF_3)_2$, $LiC(SO_2CF_3)_3$, $Li_2B_{10}Cl_{10}$, a lithium salt of a lower aliphatic carboxylic acid, and $LiAlCl_4$. They may be used as a mixture of two or more of them. Among these lithium salts, it is preferable to use at least one selected from the group consisting of $LiPF_6$, $LiAsF_6$, $LiSbF_6$, $LiBF_4$, $LiCF_3SO_3$, $LiNC(SO_2CF_3)_2$ and $LiC(SO_2CF_3)_3$, all of which comprises fluorine atoms.

Examples of the organic solvent contained in the electrolytic solution include carbonates such as propylene carbonate, ethylene carbonate, dimethyl carbonate, diethyl carbonate, ethyl methyl carbonate, 4-trifluoromethyl-1,3-dioxolan-2-one, and 1,2-di(methoxycarbonyloxy)ethane; ethers such as 1,2-dimethoxyethane, 1,3-dimethoxypropane, pentafluoropropyl methyl ether, 2,2,3,3-tetrafluoropropyl difluoromethyl ether, tetrahydrofuran, and 2-methyltetrahydrofuran; esters such as methyl formate, methyl acetate, and γ-butyrolactone; nitriles such as acrylonitrile and butyronitrile; amides such as N,N-dimethyl formamide and N,N-dimethyl acetamide; carbamates such as 3-methyl-2-oxazolidone; sulfur-containing compounds such as sulpholane, dimethyl sulfoxide, and 1,3-propane sultone; above solvents to which a fluorine-containing substituent is introduced may be used. Usually, they are used as a mixture of two or more of them. Among them, a mixed solvent comprising a carbonate is preferable, and a mixed solvent of a cyclic carbonate and an acyclic carbonate and a mixed solvent of a cyclic carbonate and an ether are more preferable. Among the mixed solvents of the cyclic carbonate and the acyclic carbonate, a mixed solvent comprising ethylene carbonate, dimethyl carbonate or ethyl methyl carbonate is preferable, since they have a wide operating temperature range and good load characteristics, and they are hardly degraded even if the graphite material such as natural graphite or artificial graphite is used as the active material for an anode. It is preferable to use an electrolytic solution comprising a lithium salt having a fluorine atom such as $LiPF_6$, and an organic solvent having a fluorine-containing substituent, since a particularly excellent effect of improving safety can be obtained. A mixed solvent comprising dimethyl carbonate and an ether having a fluorine-containing substituent such as pentafluoropropyl methyl ether or 2,2,3,3-tetrafluoropropyl difluoromethyl ether is more preferable, because of its good high current discharge characteristics.

When a solid electrolyte is used instead of the above-mentioned electrolytic solution, a lithium polymer secondary battery is obtained. As the solid electrolyte, for example, a polymer electrolyte such as a high molecular weight polyethylene oxide, a high molecular weight compound comprising at least one of a polyorganosiloxane chain and a polyoxyalkyene chain may be used. Also, a so-called gel-type electrolyte in which a nonaqueous electrolytic solution is impregnated in a polymer may be used. When a sulfide electrolyte such as $Li_2S$-$SiS_2$, $Li_2S$-$GeS_2$, $Li_2S$-$P_2S_5$ or $Li_2S$-$B_2S_3$, or an inorganic compound electrolyte comprising a sulfide such as $Li_2S$-$SiS_2$-$Li_3PO_4$ or $Li_2S$-$SiS_2$-$Li_2SO_4$ is used, the safety of a battery can be further improved.

Hereinafter, a capacitor comprising the laminated porous film of the present invention as a separator will be illustrated. The capacitor can be produced by a conventional method such as a method disclosed in JP-A-2000-106327.

The capacitor may include an electric double layer capacitor. The capacitor comprises electrodes, a separator and an electrolytic solution, and the electrolyte dissolved in the electrolytic solution is absorbed by the electrodes, so that the electric energy is stored in an interface (an electric double layer) formed between the electrolyte and each electrode.

As the electrode for the capacitor, carbonaceous materials such as activated carbon carbon black, and polyacene may be used. In general, activated carbon having fine pores including mainly micropores (with a pore diameter of usually 20 A or less), which is prepared by carbonizing a raw material such as coconut shell and activating it, is used. The whole pore volume of the activated carbon is usually less than 0.95 m1/g, preferably not less than 0.5 ml/g and not more than 0.93 m1/g. The whole pore volume of not less than 0.95 m1/g is preferable, because the electric capacity per unit volume increases. The activated carbon is usually pulverized to particles with an average particle size of 50 μm or less, preferably 30 μm or less, particularly 10 μm or less. The bulk density of the electrode can be increased and the internal resistance can be lowered by finely pulverizing the activated carbon.

Activated carbon containing few metal components such as alkali metals and alkaline earth metals, in other words, having a metal content of 100 ppm or less is preferably used as an electrode material, because scuh activated carbon induces no polarization due to the metal components, and it forms a number of electric double layers. Generally, the electrode further comprises a binder, a conductive agent, and the like, for easy formation of the electrode. The carbonaceous material may function also as a conductive agent.

For producing an electrode, generally, a mixture containing activated carbon, a binder, a conductive agent, and the like is formed on a collector. Examples of a method for producing an electrode include a method comprising coating a collector with a mixed slurry prepared by adding a solvent to activated carbon, a binder, a conductive agent, and the like by a doctor blade method or the like, or immersing a collector in the mixed slurry, and drying the coated collector; a method comprising adding activated carbon, a binder, a conductive agent, and the like to a solvent, kneading the mixture, forming and drying the mixture to give a sheet, bonding the resulting sheet to the collector surface with a conductive adhesive or the like, and pressing a laminate of the sheet and the collector, followed by heat-treatment and

drying; a method forming a mixture containing activated carbon, a binder, a conductive agent, a liquid lubricant, and the like on a collector, removing the liquid lubricant from the mixture, and then uniaxially or multi-axially stretching the resulting molded sheet; and so on. When the electrode is in the form of a sheet, its thickness is from about 50 to 1000 $\mu$m.

The material of a collector used in the electrode for the capacitor may include, for example, metals such as nickel, aluminum, titanium, copper, gold, silver, platinum, aluminum alloy, and stainless steel; a sheet formed by plasma spraying or arc spraying of nickel, aluminum, zinc, copper, tin, lead or alloys thereof on a carbonaceous material or an activated carbon fiber; conductive films comprising a conductive agent dispersed in a rubber or a resin such as a styrene-butylene-styrene copolymer (SEBS); and the like. Aluminum is particularly preferable, because it is lightweight, has excellent electric conductivity, and is electrochemically stable.

Examples of the conductive agent used in the electrode for the capacitor include conductive carbon such as graphite, carbon black, acetylene black, Ketchen black, and activated carbon; graphite conductive agents such as natural graphite, thermally expandable graphite, flaky graphite, and expandable graphite; carbon fibers such as vapor-grown carbon fiber; fine particles or fibers of a metal such as aluminum, nickel, copper, silver, gold, or platinum; conductive metal oxides such as ruthenium oxide or titanium oxide; and conductive polymers such as polyaniline, polypyrrole, polytiophene, polyacetylene, and polyacene. Carbon black, acetylene black and Ketchen black are particularly preferable, because the conductivity is effectively improved even if they are used in a small amount. The amount of the conductive agent contained in the electrode is usually from about 5 to 50 parts by weight, preferably from about 10 to 30 parts by weight, per 100 parts by weight of the activated carbon in the present invention.

The binder used in the electrode for the capacitor may be a polymer of a fluorine compound, and examples of the fluorine compound include fluorinated $C_1C_{18}$-alkyl (meth)acrylates, perfluoroalkyl (meth)acrylates, perfluoroalkyl-substituted alkyl (meth)acrylates, perfluoroxyalkyl (meth)acrylates, fluorinated $C_1$-$C_{18}$-alkyl crotonate, fluorinated $C_1$-$C_{18}$-alkyl malates and fumarates, fluorinated $C_1$-$C_{18}$-alkyl itaconate, fluorinated alkyl-substituted olefins having about 2 to 10 carbon atoms and about 1 to 17 fluorine atoms, tetrafluoroethylene, trifluoroethylene, vinylidene fluoride, hexafluoropropylene, and the like. Apart from these compounds, addition polymers of monomers having an ethylenic double bond with no fluorine atom, polysaccharides such as starch, methyl cellulose, carboxymethyl cellulose, hydroxymethyl cellulose, hydroxyethyl cellulose, hydroxypropyl cellulose, carboxymethyl hydroxyethyl cellulose, nitrocellulose, and derivatives thereof, pheynol resins; melamine resins; polyurethane resins; urea resins; polyimide resins; polyamideimide resins; petroleum pitch; coal pitch; and the like. Among them, the polymers of a fluorine compound are preferable, and polytetrafluoroetylene, which is a polymer of tetrafluoroethylene, is particularly preferable as the binder. A plural kinds of the binders may be used as the binders. The amount of the binder used in the electrode is usually from about 0.5 to 30 parts by weight, preferably from about 2 to 30 parts by weight, per 100 parts by weight of the activated carbon.

The electrolytes dissolved in the electrolytic solution for the capacitor are roughly divided into inorganic electrolytes and organic electrolytes. Examples of the inorganic electrolyte include acids such as sulfuric acid, hydrochloric acid and perchloric acid; bases such as sodium hydroxide, potassium hydroxide, lithium hydroxide and tetraalkylammonium hydroxides; salts such as sodium chloride and sodium sulfate, and the like. Among them, an aqueous sulfuric acid solution is preferable as the inorganic electrolyte, because it has good stability and a low corrosive property against materials constituting the electric double layer capacitors. The concentration of the inorganic electrolyte is usually from about 0.2 to 5 moles of electrolyte per liter of an electrolytic solution, preferably from about 1 to 2 moles of electrolyte per liter of an electrolytic solution. When the concentration is from 0.2 to 5 moles/L, the ion conductivity in the electrolytic solution can be secured. The inorganic electrolyte is usually mixed with water and used in the form of an electrolytic solution.

Examples of the organic electrolyte include combinations of an inorganic anion such as $BO_3^{3-}$, $F^-$, $PF_6^-$, $BF_4^-$, $AsF_6$, $SbF_6^-$, $ClO_4^-$, $AlF_4^-$, $AlCl_4^-$, $TaF_6^-$, $NbF_6^-$, $SiF_6^{2-}$, $CN^-$ or $F(HF)^{n-}$ wherein n is a number of not less than 1 and not more than 4, and an organic cation described below; combinations of an organic anion and an organic cation, which are described below; combinations of an organic anion and an inorganic cation such as lithium ion, sodium ion, potassium ion, or hydrogen ion.

The organic cation is a cationic organic compound, and examples thereof include organic quaternary ammonium cation, organic quaternary phosphonium cation, and the like. The organic quaternary ammonium cation is a quaternary ammonium cation comprising a hydrocarbon group selected from the group consisting of a $C_1$-$C_{20}$-alkyl group, a $C_6$-$C_{20}$-cycloalkyl group, a $C_6$-$C_{20}$-aryl group, and a $C_7$-$C_{20}$-aralkyl group. The organic quaternary phosphonium cation is a quaternary phosphonium cation comprising the same hydrocarbon group as above. The hydrocarbon group may have a hydroxyl group, an amino group, a nitro group, a cyano group, a carboxyl group, an ether group, an aldehyde group, or the like. As the organic cation, the organic quaternary ammonium cation is preferable, and an imidazolium cation is preferable. 1-Ethyl-3-methyl imidazolium ($EMI^+$) is particularly preferable, because the electric capacity per unit volume tends to increase.

The organic anion is an anion having a hydrocarbon group which may have a substituent, and examples thereof include an anion selected from the group consisting of $N(SO_2R_f)_2^-$, $C(SO_2R_f)_3^-$, $R_fCOO^-$ and $R_fSO_3^-$ wherein $R_f$ is a perfluoroalkyl group having 1 to 12 carbon atoms; and an anion in which an active hydrogen atom is removed from an

organic acid such as a carboxylic acid, an organic sulfonic acid and an organic phosphoric acid, or phenol. As the anions, the inorganic anions are preferable, and $BF_4^-$, $AsF_6^-$ and $SBF_6^-$ are particularly preferable, and $BF_4^-$ is particularly preferable, because the electric capacity tends to increase.

The organic polar solvent contained in the electrolytic solution is a solvent containing, as a main component, at least one compound selected from the group consisting of carbonates, lactones and sulfoxides, and preferably, a solvent containing, as a main component, at least one compound selected from the group consisting of propylene carbonate, ethylene carbonate, butylene carbonate, sulfolane, 3-methylsulfolane, acetonitrile, dimethyl carbonate, ethyl methyl carbonate, γ-butyrolactone, ethylene glycol and diethyl carbonate. A solvent containing, as a main component, at least one compound selected from the group consisting of ethylene carbonate, propylen carbonate, γ-butyrolactone and sulfolane is particularly preferable. Herein, the phrase "containing as a main component" is intended to mean that a specific the compound is contained in a solvent in an amount of at least 50% by weight, preferably at least 70% by weight. The larger amount of the organic polar solvent can more improves the long-time durability and the operating voltage of the capacitor. The organic polar solvent which dissolves the electrolyte may be a mixed solvent of two or more solvents.

Examples of a method for producing a capacitor using the electrodes and the electrolytic solution for the capacitor and the separator include a method comprising winding a pair of electrode sheets with inserting a separator between them to form an electrode member, immersing the electrode member in an electrolytic solution, and placing it in a closed-end cylindrical case; and a method comprising alternately laminating rectangle electrodes and rectangle separators to form an electrode member, immersing the electrode member in an electrolytic solution, and placing it in a closed-end square shape case.

Hereinafter, the present invention will be explained in more detail by the following Examples. The evaluations of a laminated porous film, and the production and evaluations of a non-aqueous electrolyte secondary battery were performed as follows:

Evaluations of Laminated Porous Film

(1) Measurement of Thickness

The thicknesses of a laminated porous film and a shut-down layer were measured in accordance with JIS K 7130-1992. The thickness of a heat-resistant porous layer was obtained by subtracting the thickness of the shut-down layer from the thickness of the separator.

(2) Measurement of Gas Permeability by Gurley Method

The gas permeability of a laminated porous film was measured using a Gurley densometer with a digital timer manufactured by Yasuda Seiki Seisakusho Ltd. in accordance with JIS P 8117.

(3) Porosity

The obtained porous film was cut into a square sample (10 cm x 10 cm), and the weight W (g) and the thickness D (cm) of the sample were measured. The weight (Wi (g)) of each layer in the sample was measured, the volume of each layer was calculated from Wi and the absolute specific gravity (absolute specific gravity i (g/cm$^3$)) of the material of each layer. Then, the porosity (% by volume) was calculated by the following equation:

$$\text{Porosity (\% by volume)} = 100 \times \{1 - (\text{W1/Absolute Specific Gravity 1} + \text{W2/Absolute Specific Gravity 2} + \cdots + \text{Wn/Absolute Specific Gravity n})/(10 \times 10 \times \text{D})\}$$

(4) Measurement of Free Chlorine Content

A laminated porous film was immersed in ion-exchange water in a container, and the container was placed in a pressure cooker and maintained still at 120°C for 24 hours under a pressure of saturated water vapor to extract chlorine ions from the laminated porous film into the ion-exchange water. The amount of the chlorine in the ion-exchange water was measured according to ion chromatography to obtain a free chlorine content in the laminated porous film.

(5) Measurement of Shutdown Temperature of Laminated Porous Film

Using a cell for measuring a shutdown temperature as shown in Fig. 1 (hereinafter referred to as a "cell"), a shutdown temperature was measured.

A 6 cm square separator (8) was arranged on one of SUS plate electrodes (10) and impregnated with an electrolyte (9) in vacuo. Then, an electrode (13) with a spring (12) was put on the separator (8) so that the spring faced upward. The other SUS plate electrode (10) was put on a spacer (11) arranged on the electrode (10), and both of the electrodes (10), (10) were fastened so as to apply a surface pressure of 1 $kgf/cm^2$ to the separator (8) through the spring (12) and the electrode (13). Thereby, a cell was assembled. As the electrolyte (9), an electrolyte containing 1 mol/L of $LiPF_6$ dissolved in a mixed solution of 30% by volume of ethylene carbonate, 35% by volume of dimethyl carbonate and 35% by volume of ethylmethyl carbonate was used. The terminals of an impedance analyzer (7) were connected to both of the electrodes (10), (10) of the assembled cell, and a resistance was measured at 1 kHz. Also, a thermocouple (14) was set just under the separator so that a temperature was measured at the same time, and the temperature was raised at a heating rate of 2°C/minute to perform measurements of impedance and a temperature. A temperature at which an impedance reached 1,000 Ω at 1 kHz was defined as a shutdown temperature (SD temperature). After the shutdown, the temperature was further raised, and a temperature at which a laminated porous film was broken, and the internal resistance began to lower upon measurement was defined as a temperature at which a film is thermally broken.

Production and Evaluation of Non-Aqueous Electrolyte Secondary Battery

(1) Production of Cathode Sheet

Carboxymethylcellulose, polytetrafluoroethylene, acetylene black, and a lithium cobaltate powder as a cathode active material were dispersed in water and the mixture was kneaded to prepare a paste of an electrode mixture for a cathode. The weight ratio of the components contained in this paste, that is, the weight ratio of carboxymethylcellulose : polytetrafluoroethylene : acetylene black : lithium cobaltate powder : water was 0.75 : 4.55 : 2.7 : 92 : 45. The paste was applied to both sides of a cathode collector made of an aluminum foil having a thickness of 20 μm in predefined surface regions, and the obtained product was dried, roll-pressed, and slit to obtain a cathode sheet. The surface region of the aluminum foil having no applied electrode mixture for a cathode had a length of 1.5 cm, and an aluminum lead was resistance-welded to the uncoated region.

(2) Production of Anode Sheet

Carboxymethylcellulose, natural graphite and artificial graphite were dispersed in water and the mixture was kneaded to prepare a paste of an electrode mixture for an anode. The weight ratio of the components contained in this paste, that is, the weight ratio of carboxymethyl cellulose : i natural graphite : artificial graphite : water was 2.0 : 58.8 : 39.2 : 122.8. The paste was applied to the both sides of an anode collector made of a copper foil having a thickness of 12 μm in predefined surface regions, and the obtained product was dried, roll-pressed and slit, thereby obtaining an anode sheet. The surface region of the copper foil having no applied electrode mixture for an anode had a length of 1.5 cm, and a nickel lead was resistance-welded to the uncoated region.

(3) Production of Non-Aqueous Electrolyte Secondary Battery

A separator, the cathode sheet, the anode sheet (length of a surface region having no applied electrode mixture for an anode: 30 cm) were laminated in the order of the cathode sheet, the separator and the anode sheet so that the part of the anode sheet with a surface region having no applied electrode mixture for an anode constituted the outermost layer. Then, the laminate was wound from its one end to form an electrode member. The electrode member was inserted in a battery can and then impregnated with an electrolytic solution comprising $LiPF_6$ dissolved in a mixed liquid of ethylene carbonate, dimethyl carbonate and ethyl methyl carbonate at a volume ratio of 16 : 10 : 74 in a concentration of 1 mole/liter. The can was sealed via a gasket with a battery lid, which also acted as a positive terminal to obtain a 18650 cylindrical battery (non-aqueous electrolyte secondary battery). The layers were laminated so that the heat-resistant porous layer in the separator was brought into contact with the cathode sheet, and the shut-down layer in the separator was brought into contact with the anode sheet.

(4) Evaluations

The cylindrical battery as produced above was fixed to a special mount, a nail having a diameter of 2.5 mm set on an oil press nail penetration tester was lowered at a rate of 5 mm/second, and a thermal behavior was observed

when the nail was penetrated the center of the cylindrical part of the battery.

EXAMPLE 1

A reactor equipped with a stirrer, a torque meter, a nitrogen gas inlet tube, a thermometer and a reflux condenser was charged with 941 g (5.0 moles) of 2-hydroxy-6-naphthoic acid, 273 g (2.5 moles) of 4-aminophenol, 415.3 g (2.5 moles) of isophthalic acid, and 1123 g (11 moles) of acetic anhydride. After the interior space of the reactor was thoroughly replaced with nitrogen gas, the temperature was raised to 150°C over 15 minutes under a nitrogen gas stream, and the mixture was refluxed for 3 hours while maintaining the above temperature.

Subsequently, the temperature was raised to 320°C over 170 minutes while distilling off by-produced acetic acid and unreacted acetic anhydride from the reaction system. The time point at which the increase of a torque was confirmed was considered as the termination of a reaction, and the content was recovered from the reactor. The resulting solid product was cooled to room temperature and pulverized in a coarse grinder, and the pulverized material was maintained at 250°C for 3 hours under nitrogen atmosphere to proceed the polymerization reaction in a solid phase. The obtained powder was observed at 350°C with a polarization microscope, and was found to have Schlieren patterns, which are the characteristics of a liquid crystal phase. Then, 8 g of the powder (liquid crystalline polyester) was added to 92 g of N-methyl-2-pyrrolidone, and the mixture was heated to 120°C to dissolve the powder completely, thus resulting in the formation of a transparent solution containing a liquid crystalline polyester at a concentration of 8% by weight.

Additional N-methyl-2-pyrrolidone was added to the solution and the mixture was stirred to give a solution containing a liquid crystalline polyester at concentration of 3% by weight. To 100 g of the solution, 9 g of high purity alumina (manufactured by Nippon Aerosil Co., Ltd.; average particle diameter: 0.013 μm) was added. After that, the alumina was dispersed in the solution by stirring the mixture at a high revolution rate of 6,000 rpm to give a slurry coating liquid.

An A4 sized glass plate was supplied, and a polyethylene porous film (manufactured by Mitsui Chemicals, Inc.; film thickness: 16 μm; gas permeability: 121 seconds/100 cc; average pore diameter: 0.06 μm; porosity: 49% by volume), which was cut into a rectangular shape, was put on the glass plate. Then, one side of the narrow sides was fixed to the glass plate with an adhesive tape. Next, a stainless steel coating bar with a diameter of 20 mm was arranged in parallel with the porous film to leave a clearance of 0.04 mm between the porous film and the bar. The slurry coating liquid prepared in the previous step was put on the porous film in front of the coating bar, and then the both sides of the bar were held with both hands, the slurry coating liquid was coated on the whole surface of the porous film by moving the bar forward. Then, the film with the glass plate was kept in an oven at 70°C for 30 minutes to evaporate the solvent, and the film was peeled from the glass plate. The film was washed with flowing water for 5 minutes in a resin tray, fixed to an A4 sized metal frame, and dried in an oven at 70°C for 10 minutes together with the metal frame to give a laminated porous film.

The laminated porous film formed had a thickness of 20 μm, a porosity of 45%, a gas permeability of 450 seconds/100 cc, and a free chlorine content of 60 ppm by weight. The laminated porous film had a shutdown temperature of 134°C, and it was not thermally broken even at 200°C.

In order to determine the weather resistance of the laminated porous film produced in the above, the film was allowed to stand at 25°C for 12 hours under a relative humidity of 80%, and then it was used as a separator for assembling a non-aqueous electrolyte secondary battery. When a nail was penetrated the battery, and then the thermal behavior was observed, the temperature was gradually raised. From the results, it was found that the insulation property under high humidity, in other words, the weather resistance was excellent.

COMPARATIVE EXAMPLE 1

A heat-resistant porous layer was prepared in the same manner as in EXAMPLE 1 except that a PET film having a thickness of 100 μm was used in place of a polyethylene porous film and the clearance was adjusted to 0.20 mm, and then the PET film was peeled to obtain a single layer porous film consisting of the liquid crystal polyester and alumina. This film had a thickness of 20 μm, a porosity of 50%, and a gas permeability of 460 seconds/100 cc. This film did not exhibit any shutdown function even at 200°C.

Industrial Applicability

According to the present invention, it is possible to provide a laminated porous film which has high heat resistance and can shut down an electric current at a lower temperature, and which has also good weather resistance and can be produced at low costs by a simpler method. The film of the present invention is extremely favorable for use in a non-aqueous electrolyte secondary battery and is satisfactorily used in a capacitor, and the present invention is industrially very useful.

## Claims

1. A laminated porous film comprising a laminate of a heat-resistant porous layer containing a liquid crystalline polyester and a shutdown layer containing a thermoplastic resin.

2. The laminated porous film according to claim 1, wherein the heat-resistant porous layer further contains a filler.

3. The laminated porous film according to claim 1 or 2, wherein the thermoplastic resin is polyethylene.

4. The laminated porous film according to claim 1 or 2, wherein the heat-resistant porous layer has a thickness of 1 μm or more and 10 μm or less.

5. The laminated porous film according to claim 1 or 2, wherein the heat-resistant porous layer is a coated layer.

6. A separator made of the laminated porous film according to claim 1 or 2.

7. A battery comprising the separator according to claim 6.

8. A capacitor comprising the separator according to claim 6.

Fig. 1

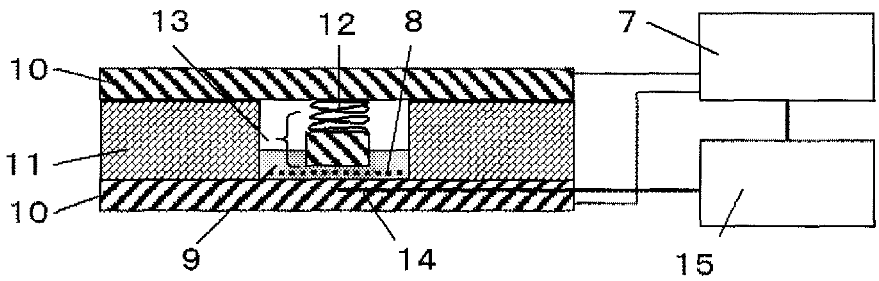

**INTERNATIONAL SEARCH REPORT**

International application No.
PCT/JP2008/058987

A. CLASSIFICATION OF SUBJECT MATTER
*B32B27/36*(2006.01)i, *B32B27/32*(2006.01)i, *H01G9/02*(2006.01)i, *H01M2/16*(2006.01)i

According to International Patent Classification (IPC) or to both national classification and IPC

B. FIELDS SEARCHED

Minimum documentation searched (classification system followed by classification symbols)
B32B1/00-43/00, H01G9/02, H01M2/00-16/00, C08J9/00-9/42

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2007-95575 A (Japan Vilene Co., Ltd.),<br>12 April, 2007 (12.04.07),<br>Claims; Par. Nos. [0023], [0027], [0030]<br>(Family: none) | 1,3,4,6,7<br>2,4,8 |
| Y | JP 5-82171 A (Asahi Chemical Industry Co., Ltd.),<br>02 April, 1993 (02.04.93),<br>Par. Nos. [0002], [0013], [0014]<br>(Family: none) | 1-8 |
| Y | JP 2001-342282 A (Sumitomo Chemical Co., Ltd.),<br>11 December, 2001 (11.12.01),<br>Claims; Par. Nos. [0001], [0002], [0005], [0006], [0076]<br>(Family: none) | 1-8 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 18 July, 2008 (18.07.08) | 29 July, 2008 (29.07.08) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

International application No.
PCT/JP2008/058987

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2000-30686 A (Sumitomo Chemical Co., Ltd.), 28 January, 2000 (28.01.00), Par. Nos. [0114], [0115] & US 6447958 B1 | 5 |
| Y | JP 2006-88426 A (Sumitomo Chemical Co., Ltd.), 06 April, 2006 (06.04.06), Par. Nos. [0024], [0025] (Family: none) | 5 |
| Y | JP 2006-348280 A (Sumitomo Chemical Co., Ltd.), 28 December, 2006 (28.12.06), Par. No. [0002] & WO 2006/123798 A1 | 8 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2001342282 A
- JP 7029563 A
- JP 7304110 A
- JP 2001316006 A
- JP 2001023602 A
- JP 2000106327 A